(19) Europäisches Patentamt
European Patent Office
Office européen des brevets

(11) **EP 4 620 603 A2**

(12) **EUROPEAN PATENT APPLICATION**

(43) Date of publication:
24.09.2025 Bulletin 2025/39

(21) Application number: 25150814.9

(22) Date of filing: 09.01.2025

(51) International Patent Classification (IPC):
***B23C 5/22*** *(2006.01)*

(52) Cooperative Patent Classification (CPC):
**B23C 5/2213;** B23C 2200/125; B23C 2200/203;
B23C 2200/284

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **02.02.2024 JP 2024015055**

(71) Applicant: **Tungaloy Corporation**
**Iwaki-shi,**
**Fukushima 970-1144 (JP)**

(72) Inventor: **SHIROMA, Hikaru**
**Iwaki-shi, Fukushima, 9701144 (JP)**

(74) Representative: **Vossius & Partner**
**Patentanwälte Rechtsanwälte mbB**
**Siebertstrasse 3**
**81675 München (DE)**

(54) **CUTTING INSERT AND A CUTTING TOOL COMPRISING THE SAME**

(57) Trigonal cutting insert (10) with two end surfaces and a side surface (1, 10S). The flank connected to the cutting edge (2A) on the side surface (1, 10S) has a negative clearance angle. The cutting edge (2A) comprises a major cutting edge (21), an inner cutting edge (21, 22), and a corner cutting edge (23) that is formed in a curved shape between the major cutting edge (21) and the inner cutting edge (21, 22). The flank has a first to third side surface parts (S1, S2, S3) that are connected to the major cutting edge (21), the inner cutting edge (21, 22) and the corner cutting edge (23), respectively. The length (W1) in the width direction of the third side surface part (S1, S2, S3) is largest at a first boundary between the third side surface part (S1, S2, S3) and the first side surface part (S1, S2, S3) and gradually decreases from the first boundary to at least an intermediate position toward a second boundary between the third side surface part (S1, S2, S3) and the second side surface part (S1, S2, S3).

Figure 1

## Description

## Background

Field

The present disclosure relates to a cutting insert and a cutting tool comprising the same.

Description of Related Art

In recent years, there has been an increasing demand for a rotary cutting tool capable of performing high-feed machining in order to improve machining efficiency. In response to such demand, for example, WO2023/176619 describes a cutting insert and a cutting tool intended to improve the discharging efficiency of chips and the wear resistance of a rake surface that corresponds to a cutting edge. On the other hand, such conventional cutting insert may not be able to sufficiently suppress damage that occurs during machining in a corner cutting edge formed continuously to a major cutting edge, depending on the height (width) of a flank corresponding to such corner cutting edge. In order to solve such problem, the applicant has focused on the shapes of a corner cutting edge and an area therearound and proposed a cutting insert and a rotary cutting tool capable of suppressing damage in the corner cutting edge and the area therearound in, for example, JP7011689 B.

Meanwhile, in cutting inserts, cutting edges typically tend to be designed such that the optimum cutting performance can be achieved by a major cutting edge. In particular, from among such cutting inserts, a negative insert which can be used in a double-sided application has a relatively low degree of freedom in the design of a clearance angle, and the clearance angle to be employed is almost fixed in many cases. Thus, if the optimum design is made for the major cutting edge and no other special measures are taken, the clearance angle of a portion corresponding to the corner cutting edge tends to inevitably become large. As a result, it becomes difficult to sufficiently suppress damage in the corner cutting edge in some cases.

## Summary

Under the circumstances set forth above, an object of the present disclosure is to provide a cutting insert capable of further suppressing damage in a corner cutting edge in comparison with the conventional design and thereby remarkably improving the tool life, as well as a cutting tool comprising such cutting insert.
In order to achieve the above object, the present disclosure employs the configurations set forth below.

[1] An example of a cutting insert according to the present disclosure has two end surfaces facing each other, and a side surface joined to the two end surfaces, the cutting insert being formed in a substantially polygonal shape in a plan view of such end surfaces, and the cutting insert comprises: a cutting edge formed on sides (outer edges) of the end surfaces; and a flank connected to the cutting edge on the side surface and having a negative clearance angle. The cutting edge has a first cutting edge, a second cutting edge, and a third cutting edge that is formed between the first cutting edge and the second cutting edge, the third cutting edge being formed in a curved shape in the plan view. The flank has a first side surface part, a second side surface part and a third side surface part that are connected to the first cutting edge, the second cutting edge and the third cutting edge, respectively. The length in the width direction of the third side surface part is largest at a first boundary located between the third side surface part and the first side surface part and gradually decreases from the first boundary to at least an intermediate position (a midpoint range) toward a second boundary located between the third side surface part and the second side surface part. In the present disclosure, the "clearance angle" being "negative" indicates that the flank is formed so as to be inclined outward as it extends away from the cutting edge. In addition, the "length in the width direction" refers to a length along a direction that is perpendicular or substantially perpendicular to a reference plane P1 (described later) of the cutting insert (i.e., a direction along or substantially along the central axis Az (described later)) (in other words, the "length in the width direction" can alternatively be referred to as a substantial "longitudinal width" or "height").
With such configuration, unlike the conventional cutting edge design, the clearance angle of the third side surface part, being a flank corresponding to the third cutting edge (corresponding to the conventional "corner cutting edge") formed in a curved shape in a plan view, is not too large in comparison with the clearance angle of the first side surface part, being a flank corresponding to the first cutting edge (corresponding to the conventional "major cutting edge"), and the wedge angle of the third cutting edge is not too small in comparison with the wedge angle of the first cutting edge.
[2] According to another aspect different from the above-described configuration, the cutting insert may be formed such that the clearance angle of the third side surface part gradually increases in a negative direction from one of a first boundary and a second boundary to an intermediate position toward the other of the first boundary and the second boundary and then gradually decreases in the negative direction from the intermediate position to the other of the first boundary and the second boundary, the first boundary being located between the third side surface part and the first side surface part, and the second boundary being located between the third side surface part and the second side surface part.

[3] More specifically, a position at which the clearance angle of the third side surface part reaches its maximum may be located on the first boundary side, with respect to a point at half a distance (50%) from the first boundary to the second boundary.

[4] In such configuration, the cutting insert may have a through hole provided so as to extend through the two end surfaces; and at least one of the two end surfaces may be provided with a plurality of the cutting edges, the plurality of cutting edges being rotationally symmetrical to each other with respect to the central axis of the through hole. Such configuration allows the cutting insert according to the present disclosure to be indexable and usable multiple times on a single end surface, which contributes to improvements in economic efficiency.

[5] In this case, in a more specific example, the plurality of cutting edges may be 120-degrees rotationally symmetrical to each other with respect to the central axis of the through hole; and the cutting insert may be formed in a substantially hexagonal shape in a plan view of the end surfaces.

[6] The cutting edge may be formed on both of the two end surfaces; and the cutting insert may have a virtual rotational axis with respect to which the cutting edges of the two end surfaces are 180-degrees rotationally symmetrical to each other. In other words, the cutting edges on both the two end surfaces may be provided so as to be 180-degrees rotationally symmetrical to each other in the direction along which the cutting insert is flipped between the end surfaces. Such configuration allows the cutting insert according to the present disclosure to be indexable and usable in a double-sided application, which contributes to further improvements in economic efficiency.

[7] An example of a cutting tool according to the present disclosure can be effectively configured so as to comprise a rotary body and the cutting insert according to the present disclosure, which is mounted on the body. More specifically, the cutting insert has two end surfaces facing each other, and a side surface joined to the two end surfaces, the cutting insert being formed in a substantially polygonal shape in a plan view of such end surfaces, and the cutting insert comprises: a cutting edge formed on sides (outer edges) of the end surfaces; and a flank connected to the cutting edge on the side surface and having a negative clearance angle. The cutting edge has a first cutting edge, a second cutting edge, and a third cutting edge that is formed between the first cutting edge and the second cutting edge, the third cutting edge being formed in a curved shape in the plan view. The flank has a first side surface part, a second side surface part and a third side surface part that are connected to the first cutting edge, the second cutting edge and the third cutting edge, respectively

The third side surface part is formed such that the length thereof in the width direction is largest at the first boundary between the third side surface part and the first side surface part, and gradually decreases from the first boundary to at least an intermediate position toward the second boundary between the third side surface part and the second side surface part. Alternatively, the third side surface part may be formed such that the clearance angle thereof gradually increases from one of the first boundary and the second boundary to an intermediate position toward the other of the first boundary and the second boundary, and then gradually decreases from such intermediate position to the other of the first boundary and the second boundary, in which the first boundary is located between the third side surface part and the first side surface part, and the second boundary is located between the third side surface part and the second side surface part.

[8] [9] More specifically, in the third side surface part of the cutting insert being mounted on the body, a change in a true clearance angle with respect to a rotation trajectory of the third cutting edge may be preferably within 3 degrees, and more preferably within 1.5 degrees. Such configuration makes it possible to achieve a cutting edge shape that can prevent the fracture resistance of the third cutting edge from being significantly degraded in comparison with those of the first cutting edge and the second cutting edge.

**Brief Description of Drawings**

Fig. 1 is a perspective view schematically showing the entire configuration of a cutting insert included in a cutting tool according to the present embodiment.

Fig. 2 is a plan view (top view) of the cutting insert shown in Fig. 1.

Fig. 3 is a side view of the cutting insert shown in Fig. 1, in which the cutting insert is viewed in a direction along line III-III shown in Figs. 1 and 2.

Fig. 4 is a perspective view showing an enlarged view of an area around a leading end of the cutting tool according to the present embodiment.

Fig. 5 is a side view showing an enlarged view of an area around the leading end of the cutting tool according to the present embodiment.

**Detailed Description**

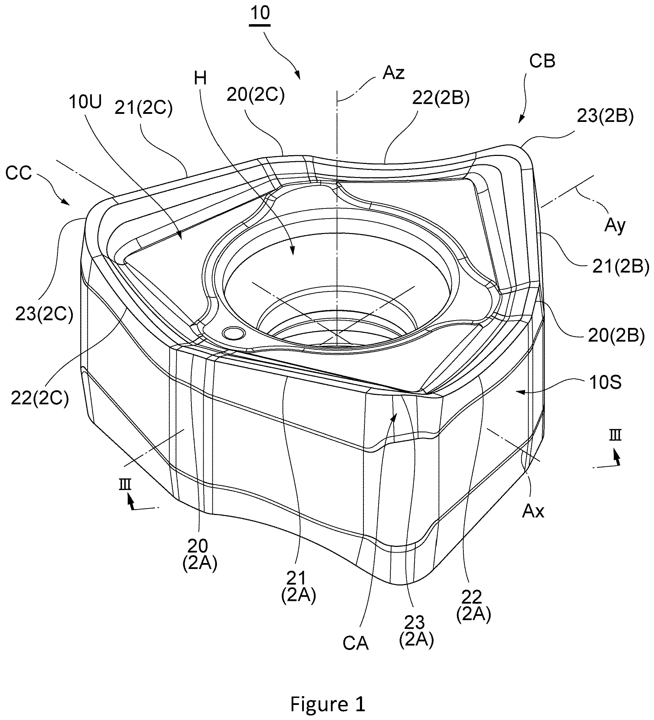

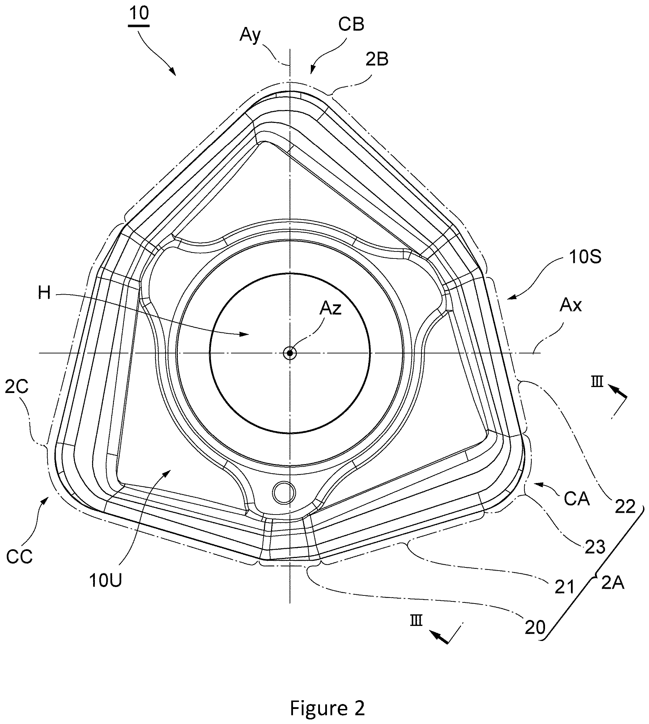

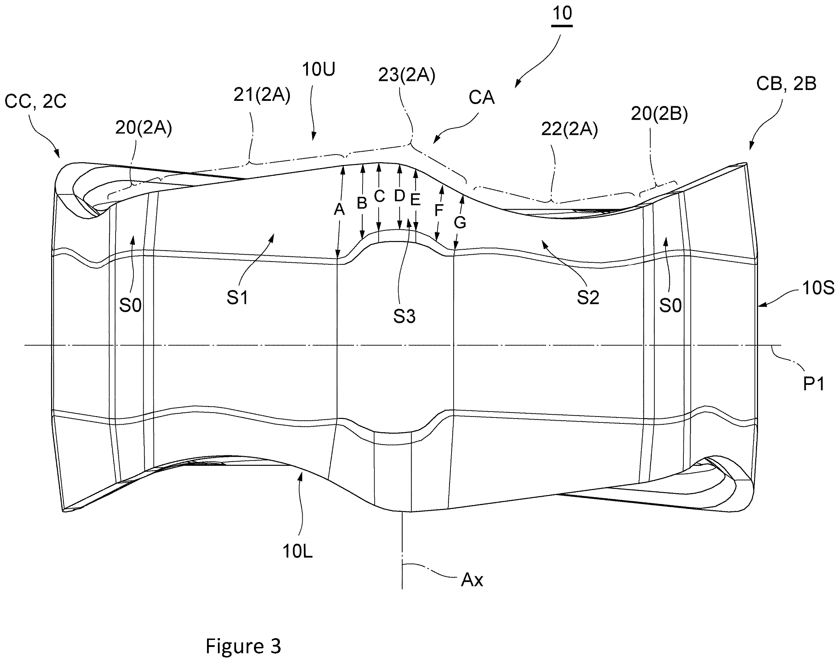

An embodiment of the present disclosure will now be described below with reference to the attached drawings. For the purpose of facilitating the understanding of the description, like components will be denoted with like reference numerals in each of the drawings, wherever possible, and redundant descriptions will be omitted. Fig. 1 is a perspective view schematically showing the entire configuration of a cutting insert included in a cutting tool according to the present embodiment, Fig. 2 is a plan view (top view) of the cutting insert shown in Fig. 1, and Fig. 3 is a side view of the cutting insert shown in Fig. 1, in which the cutting insert is viewed in a direction along line III-III shown in Figs. 1 and 2.

<Cutting Insert 10>

As shown in Figs. 1-3, a cutting insert 10 includes an end surface 10U (first end surface) and an end surface 10L (second end surface) that face each other, and a side surface 10S joined to (and connecting both of) the end surfaces 10U and 10L. Here, for the purposes of illustration, assuming that the side which the end surface 10U faces is an upper side, the end surface 10L faces downward (toward the side opposite to the orientation of the end surface 10U), which means that the end surfaces 10U and 10L face in the vertical direction, whereas the side surface 10S faces in a lateral (i.e., horizontal) direction.

As shown in Figs. 1 and 2, the end surfaces 10U and 10L are provided with a through hole H that extends through these end surfaces. In other words, Fig. 2 is a top view, in which the end surface 10U is viewed from above in a direction along the central axis Az of the through hole H, and Fig. 3 is a side view in which the side surface 10S is viewed laterally in the direction perpendicular to the central axis Az of the through hole H. In addition, as shown in Figs. 1 and 2, the cutting insert 10 is formed in a substantially polygonal (substantially hexagonal) shape in a plan view, and the side surface 10S is provided with corner parts CA, CB and CC which are arranged so as to be 120-degrees rotationally symmetrical to each other. More specifically, in Fig. 2, the side surface 10S is provided with the corner parts CA, CB and CC having the same shape, in the order mentioned, at every 120 degrees in the counterclockwise direction. In the present embodiment, these corner parts CA, CB and CC may be formed in a curved shape, such as, for example, a substantially circular-arc shape having an apex angle of, for example, 80 to 100 degrees.

Further, on sides of the end surface 10U, i.e., on intersecting edges between the end surface 10U and the side surface 10S, cutting edges 2A, 2B and 2C having the same structure are provided in the order mentioned at every 120 degrees in the counterclockwise direction in Figs. 1 and 2. More specifically, the plurality of cutting edges 2A, 2B and 2C are formed so as to be 120-degrees rotationally symmetrical (i.e., three-fold rotationally symmetrical) to each other with respect to the central axis Az of the through hole H.

Each of the cutting edges 2A, 2B and 2C has an end cutting edge 20, a major cutting edge 21 (first cutting edge), a corner cutting edge 23 (third cutting edge), and an inner cutting edge 22 (second cutting edge) which are provided continuously in the order mentioned, in the counterclockwise direction in Figs. 1 and 2. The end cutting edge 20 from among these cutting edges is located closest to the leading end of a rotary cutting tool 100 in the state where the cutting insert 10 is mounted on a body 50 (described later), and the end cutting edge 20 is a portion that partitions each pair of the cutting edges 2A, 2B and 2C. The end cutting edge 20 may be formed in, for example, a substantially linear shape, and has a function of improving a finished surface of a workpiece The major cutting edge 21 and the inner cutting edge 22 may be formed in, for example, a linear shape in a plan view, and the corner cutting edge 23 formed therebetween is formed in a curved shape (e.g., a substantially circular-arc shape) in a plan view. The corner cutting edge 23 may be formed so as to have an apex angle of, for example, 80 to 100 degrees, in the same way as the corner parts CA, CB and CC. Both of the major cutting edge 21 and the inner cutting edge 22 do not necessarily have to have a linear shape in a plan view, and they may instead have a curved shape, such as a circular-arc shape, having a radius of curvature larger than that of the corner cutting edge 23 in a plan view.

As shown in Fig. 3, the major cutting edge 21 is formed so as to be inclined with respect to a reference plane P1 (the horizontal plane in the drawing), such that the major cutting edge 21 is spaced away from the reference plane P1 as it extends away from the end cutting edge 20. The corner cutting edge 23 is formed as an arc-like projected part with respect to the reference plane P1, such that the corner cutting edge 23 is first spaced away from the reference plane P1 and then approaches the reference plane P1 as it extends away from the major cutting edge 21. The inner cutting edge 22 is formed as an arc-like recessed part with respect to the reference plane P1, such that the inner cutting edge 22 first approaches the reference plane P1 and is then spaced away from the reference plane P1 as it extends away from the corner cutting edge 23. It should be noted that the reference plane P1 is a virtual plane extending perpendicular to the central axis Az of the through hole H and passing through a middle part between the end surfaces 10U and 10L.

Here, Figs. 1 and 2 show virtual axes Ax and Ay, as an example of two-dimensional coordinate axes that exist on the reference plane P1. The cutting insert 10 is formed in 180-degrees rotational symmetry (i.e., two-fold rotational symmetry) with respect to, from among the virtual axes Ax, Ay, the virtual axis Ay (a predetermined axis virtually extending through the cutting insert along the end surfaces) that traverses the end cutting edge 20 and the corner cutting edge 23 in a plan view. In this way, the end surface 10L that is provided so as to face the end surface 10U on the opposite side thereof in the cutting insert 10 has the same structure as the end surface 10U. In other words, the cutting edges 2A, 2B and 2C having the same structure as those described above are also provided on sides of the end surface 10L, i.e., intersecting edges between the end surface 10L and the side surface 10S.

A region which is located on the outer edge side in the end surface 10U and connected to the cutting edges 2A, 2B and 2C serves as a rake surface. In addition, in an area around the through hole H in each of the end surfaces 10U and 10L, an abutment surface (a flat surface part) is formed, and this abutment surface is pressed against an insert seat of the body 50 to thereby fix the cutting insert 10 onto the body 50 when the end surfaces 10U and 10L are each used as cutting edges.

As shown in Fig. 3, which mainly shows the cutting edge 2A and a portion therearound, the side surface 10S joined to the end surfaces 10U and 10L is provided with a flank that includes side surface parts S0, S1, S2 and S3 that are connected to the end cutting edge 20, the major cutting edge 21 (first cutting edge), the inner cutting edge 22 (second cutting edge), and the corner cutting edge 23 (third cutting edge), respectively. These side surface parts S0, S1, S2 and S3 are each formed as a so-called "reverse positive surface" having a negative clearance angle. More specifically, the side surface part S1 (first side surface part) is formed so as to extend from one end of the major cutting edge 21 which is connected to the end cutting edge 20 to the other end of the major cutting edge 21 which is connected to the corner cutting edge 23. The side surface part S2 (second side surface part) is formed so as to extend from one end of the corner cutting edge 23 which is connected to the major cutting edge 21 to the other end of the corner cutting edge 23 which is connected to the inner cutting edge 22. The side surface part S3 (third side surface part) is formed so as to extend from one end of the inner cutting edge 22 which is connected to the corner cutting edge 23 to the other end of the inner cutting edge 21 which is connected to another end cutting edge 20.

Here, Fig. 3 shows double-headed dashed arrows which indicate: the locations of boundaries A to G in the case where the horizontal range of the side surface part S3 connected to the corner cutting edge 23 is divided, at substantially regular intervals, into six zones; and the respective lengths in the width direction at such boundaries. When the lengths in the width direction at the boundaries A to G are represented by W1 to W7, respectively, it may be preferable for the cutting insert 10 of the present embodiment to be configured such that, for example, the lengths in the width direction of the side surface part S3 satisfy the relationship represented by expression (1) below.

$$W1 > W2 > W3 \approx W4 \approx W5 \approx W6 \approx W7 \ldots (1)$$

In this way, in the cutting insert 10, the length W of the side surface part S3 in the width direction is configured such that the length W1 at the boundary A (first boundary) located between the side surface parts S3 and S1 is largest. More specifically, the cutting insert 10 is formed such that the length W of the side surface part S3 in the width direction gradually decreases to about W3 from the boundary A (first boundary) to at least an intermediate position (in the vicinity of boundary C) toward the boundary G (second boundary) located between the side surface parts S3 and S2 (expression (1)).

Here, when the clearance angles at the boundaries A to G in the side surface part S3 are represented by C1 to C7, respectively, it may be preferable for the cutting insert 10 of the present embodiment to be configured such that, for example, the clearance angles satisfy the relationships represented by expressions (2) and (3) below.

$$C1 < C2 < C3 \ldots (2)$$

$$C3 > C4 > C5 > C6 > C7 \ldots (3)$$

In this way, the cutting insert 10 is formed such that the clearance angle in the side surface part S3 gradually increases in the negative direction from the boundary A (first boundary) located between the side surface parts S3 and S1 to an intermediate position (in the vicinity of the boundary C) toward the boundary G (second boundary) located between the side surface parts S3 and S2 (expression (2)), and then gradually decreases in the negative direction from such intermediate position (in the vicinity of the boundary C) to the boundary G (expression (3)).

As indicated by the above-described trend of the clearance angle, and as shown in Fig. 3, the cutting insert 10 is configured such that the position (in the vicinity of the boundary C) where the clearance angle of the side surface part S3 reaches its maximum is located on the boundary A (first boundary) side, with respect to a point (in the vicinity of the boundary D) at half the distance between the boundary A (first boundary) and the boundary G (second boundary).

<Rotary Cutting Tool 100>

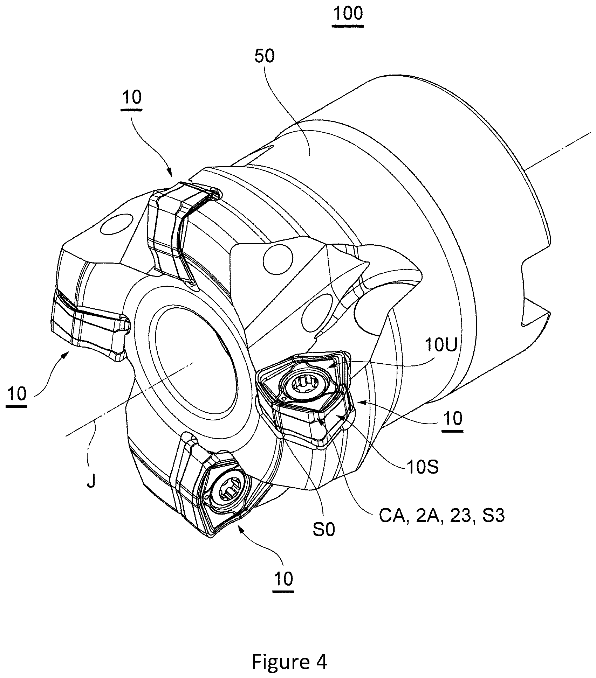

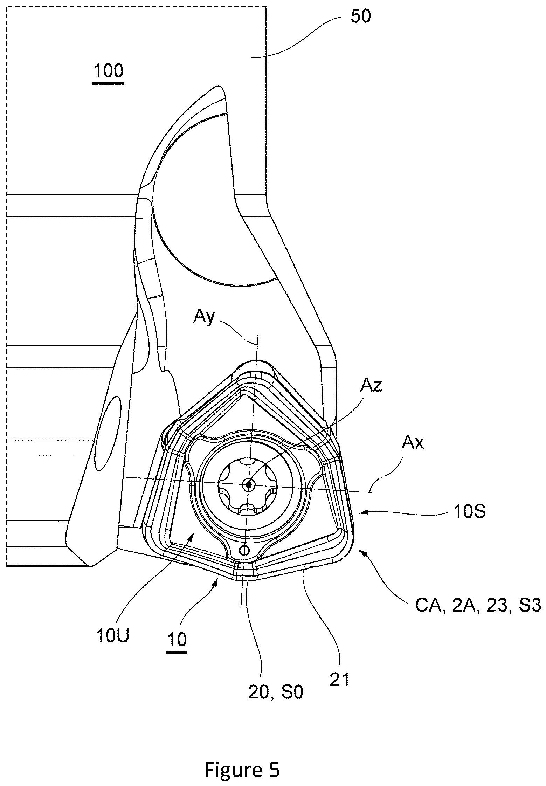

Fig. 4 is a perspective view showing an enlarged view of an area around a leading end of the cutting tool according to the present embodiment, in which the rotary cutting tool 100 (cutting tool) having four cutting inserts 10 mounted on the body 50 that rotates around a rotational axis J is viewed diagonally from the leading end side of the rotational axis J. Fig. 5 is a side view showing an enlarged view of an area around the leading end of the cutting tool according to the present embodiment, in which the rotary cutting tool 100 in the state shown in Fig. 4 is viewed in a direction parallel to the rotational axis J.

As shown in Figs. 4 and 5, the rotary cutting tool 100 comprises a plurality of cutting inserts 10 and the body 50 on which the cutting inserts 10 are mounted. The cutting inserts 10 are each mounted on the body 50 by screwing an external thread, which has been inserted in the through hole H, into an internal thread formed in the insert seat on the body 50 and causing the external thread to press the cutting insert 10 against the body 50. At this time, the end surface 10U faces in the rotating direction of the body 50, whereas the abutment surface of the end surface 10L that faces opposite to the end surface 10U is pressed against the insert seat on the body 50. In addition, the side surface part S0 in the side surface 10S faces toward the lower side of the rotational axis J in Fig. 5. The corner cutting edge 23 in the cutting edge 2A of the corner part CA is located on an outer peripheral part which is farthest from the rotational axis J and slightly protrudes outward from the body 50 in the radial direction. In addition, the end cutting edge 20 and the major cutting edge 21 slightly protrude from the body 50 toward the lower side of the rotary axis J.

According to the cutting insert 10 configured as described above, as well as the rotary cutting tool 100 on which such cutting insert 10 is mounted, the cutting insert 10 functions as a double-sided and indexable multifunctional machining member. More specifically, it is possible to use the cutting insert 10 several times by rotating the cutting insert 10 for each of the end surfaces 10U and 10L and further flipping the cutting insert 10 between the end surfaces 10U and 10L. Such configuration makes it possible to improve the economic efficiency of the tool.

As described above, in the cutting insert 10, the clearance angle of the side surface part S3, being the flank corresponding to the corner cutting edge 23, reaches its maximum at the boundary C which is located at an intermediate position toward the boundary G, with respect to the boundary A (first boundary) located between the side surface parts S3 and S1, unlike in the conventional cutting edge design. In this way, according to the cutting insert 10, the clearance angle of the side surface part S3 connected to the corner cutting edge 23 is not too large in comparison with the clearance angle of the side surface part S1 connected to the major cutting edge 21, and the wedge angle of the corner cutting edge 23 is not too small in comparison with the wedge angle of the major cutting edge 21. Such configuration makes it possible to further suppress damage in the corner cutting edge 23 during machining which is performed with the cutting insert 10 mounted on the rotary cutting tool 100, in comparison with the conventional design, thereby remarkably increasing the tool life.

More specifically, regarding the above-described rotary cutting tool 100, the applicant confirmed, after measuring a change in the true clearance angle in the side surface part S3 of the cutting insert 10, with respect to the rotation trajectory of the corner cutting edge 23, that the change in the true clearance angle was actually controlled to be within 1.5 degrees, which was quite small. In addition, the applicant has actually prepared multiple rotary cutting tools in which changes in the true clearance angles were within the range of 1.5 to 10 degrees, and conducted a test for comparing the tool lives of such cutting tools. As a result, the rotary cutting tool with the true clearance angle of 10 degrees experienced the occurrence of fractures in its corner cutting edge at an earlier timing than the other rotary cutting tools having smaller true clearance angles and became unusable. Judging comprehensively from the results of such comparison test, it was determined that a rotary cutting tool whose change in the true clearance angle is within 3 degrees exhibits significantly longer tool life than rotary cutting tools whose changes in the true clear angles are 10 degrees. It can also be understood, based on such points, that the cutting insert 10 and the rotary cutting tool 100 according to the present disclosure have an excellent suppressing effect against damage in the corner cutting edge.

Although the present embodiment has been described above with reference to the specific examples, such description has been provided in order to facilitate the understanding of the present disclosure, instead of limiting the interpretation thereof. More specifically, the present disclosure is not limited to the specific examples, and design modifications that are added as appropriate by a person skilled in the art are also encompassed in the scope of the present disclosure, as long as such design modifications include the characteristics of the present disclosure. In addition, each element, arrangement, material, condition, shape, dimension, scale, etc. included in each of the above-described specific examples is not particularly limited to those described as examples, unless otherwise indicated, and they may be altered as appropriate. Furthermore, regarding each of the elements included in each of the above-described specific examples, different combinations thereof may be employed, as long as no technical contradiction occurs.

More specifically, for example, the cutting insert according to the present disclosure may comprise four or more other cutting edges, which are similar to cutting edges 2A, 2B and 2C, on each of the end surfaces 10U and 10L. With such configuration, the cutting edges formed on the end surfaces 10U and 10L may in some cases be provided so as to be 180-degrees rotationally symmetrical with respect to both the virtual axes Ax, and Ay, being predetermined axes that each virtually pass through the cutting insert. The end cutting edge 20 may be formed so as to have an appropriate curvature, instead of a linear shape, in order to increase the sharpness thereof, and in such case, a portion of the end cutting edge 20 may be regarded as a sort of corner cutting edge. In addition, the end surfaces 10U and 10L may each be provided as appropriate with a groove and a chip breaker that are further connected to a region (rake surface) connected to the cutting edges 2A, 2B and 2C. Furthermore, in the side surface part S3, the lengths W1 to W7 in the width direction at the boundaries A to G, respectively, may be configured so as to gradually decrease from W1 to W7, i.e., so as to satisfy the relationship represented by expression (4) below. Alternatively such lengths may be configured so as to increase to an intermediate position from W1 to W7 and then decrease, i.e., so as to satisfy the relationships represented by expressions (5) and (6).

$$W1 > W2 > W3 > W4 > W5 > W6 > W7 \dots (4)$$

$$W1 > W2 > W3 > W4 \dots (5)$$

$$W4 < W5 < W6 < W7 \dots (6)$$

According to the present disclosure, it is possible to further effectively suppress damage in a corner cutting edge, thereby further improving the tool life.

**Claims**

1. A cutting insert having two end surfaces facing each other, and a side surface joined to the two end surfaces, the cutting insert being formed in a substantially polygonal shape in a plan view of such end surfaces, the cutting insert comprising:

   a cutting edge formed on sides of the end surfaces; and
   a flank connected to the cutting edge on the side surface and having a negative clearance angle,
   wherein the cutting edge has a first cutting edge, a second cutting edge, and a third cutting edge that is formed between the first cutting edge and the second cutting edge, the third cutting edge being formed in a curved shape in the plan view,
   wherein the flank has a first side surface part, a second side surface part and a third side surface part that are connected to the first cutting edge, the second cutting edge and the third cutting edge, respectively,
   wherein a length in the width direction of the third side surface part is largest at a first boundary located between the third side surface part and the first side surface part and gradually decreases from the first boundary to at least an intermediate position toward a second boundary located between the third side surface part and the second side surface part.

2. A cutting insert having two end surfaces facing each other, and a side surface joined to the two end surfaces, the cutting insert being formed in a substantially polygonal shape in a plan view of such end surfaces, the cutting insert comprising:

   a cutting edge formed on sides of the end surfaces; and
   a flank connected to the cutting edge on the side surface and having a negative clearance angle,
   wherein the cutting edge has a first cutting edge, a second cutting edge and a third cutting edge formed between the first cutting edge and the second cutting edge, the first cutting edge and the second cutting edge being each formed in a linear shape in the plan view, and the third cutting edge being formed in a curved shape in the plan view,
   wherein the flank has a first side surface part, a second side surface part and a third side surface part that are connected to the first cutting edge, the second cutting edge and the third cutting edge, respectively,
   wherein the clearance angle of the third side surface part gradually increases in a negative direction from one of a first boundary and a second boundary to an intermediate position toward the other of the first boundary and the second boundary and then gradually decreases in the negative direction from the intermediate position to the other of the first boundary and the second boundary, the first boundary being located between the third side surface part and the first side surface part, and the second boundary being located between the third side surface part and the second side surface part.

3. The cutting insert according to claim 1 or 2, wherein a position at which the clearance angle of the third side surface part reaches its maximum is located on a side of the first boundary, with respect to a point at half a distance from the first boundary to the second boundary.

4. The cutting insert according to claim 1, 2 or 3, wherein:

the cutting insert has a through hole provided so as to extend through the two end surfaces; and
at least one of the two end surfaces are provided with a plurality of the cutting edges, the plurality of cutting edges being rotationally symmetrical to each other with respect to a central axis of the through hole.

5. The cutting insert according to claim 4, wherein:

the plurality of cutting edges are 120-degrees rotationally symmetrical to each other with respect to the central axis of the through hole; and
the cutting insert is formed in a substantially hexagonal shape in a plan view of the end surfaces.

6. The cutting insert according to any one of claims 1 to 5, wherein:

the cutting edge is formed on both of the two end surfaces; and
the cutting insert has a virtual rotational axis with respect to which the cutting edges of the two end surfaces are 180-degrees rotationally symmetrical to each other.

7. A cutting tool, comprising:

a rotary body; and
the cutting insert according to any one of claims 1 to 6 which is mounted on the body.

8. The cutting tool according to claim 7, wherein, in the third side surface part of the cutting insert being mounted on the body, a change in a true clearance angle with respect to a rotation trajectory of the third cutting edge is within 3 degrees.

9. The cutting tool according to claim 7 or 8, wherein, in the third side surface part of the cutting insert being mounted on the body, a change in a true clearance angle with respect to a rotation trajectory of the third cutting edge is within 1.5 degrees.

Figure 1

Figure 2

Figure 3

Figure 4

Figure 5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2023176619 A

- JP 7011689 B